Europäisches Patentamt

**European Patent Office**

Office européen des brevets

(19)

(11) Publication number : **0 224 944 B2**

(12) # NEW EUROPEAN PATENT SPECIFICATION

(45) Date of publication of the new patent specification : **20.04.94 Bulletin 94/16**

(21) Application number : **86201722.5**

(22) Date of filing : **03.10.86**

(51) Int. Cl.⁵ : **C10G 47/12, // B01J23/28**

---

(54) Process for the conversion of hydrocarbon oils.

The file contains technical information submitted after the application was filed and not included in this specification

(30) Priority : **10.10.85 GB 8525004**

(43) Date of publication of application :
**10.06.87 Bulletin 87/24**

(45) Publication of the grant of the patent :
**07.08.91 Bulletin 91/32**

(45) Mention of the opposition decision :
**20.04.94 Bulletin 94/16**

(84) Designated Contracting States :
**BE DE FR GB IT NL SE**

(56) References cited :
**EP-A- 0 067 708**
**EP-A- 0 145 042**
**EP-A- 0 152 918**
**JP-A-60 038 036**

(56) References cited :
**JP-B-74 032 436**
**US-A- 3 840 473**
**US-A- 4 344 867**
**US-A- 4 419 222**
**US-A- 4 490 483**

(73) Proprietor : **SHELL INTERNATIONALE RESEARCH MAATSCHAPPIJ B.V.**
**Carel van Bylandtlaan 30**
**NL-2596 HR Den Haag (NL)**

(72) Inventor : **Röbschläger, Karl-Heinz Wilhelm**
**Badhuisweg 3**
**NL-1031 CM Amsterdam (NL)**
Inventor : **Van den Berg, Franciscus Gondulfus Antonius**
**Badhuisweg 3**
**NL-1031 CM Amsterdam (NL)**

(74) Representative : **Spierenburg, Jan et al**
**Shell Internationale Research Maatschappij B.V. Patents, Licensing & Trade Marks Division P.O. Box 162**
**NL-2501 AN The Hague (NL)**

EP 0 224 944 B2

## Description

The present invention relates to a process for the catalytic conversion of hydrocarbon oils by contacting the oils with a catalyst at elevated temperature and pressure and in the presence of hydrogen.

It is well known that many different catalysts can be used in catalytically converting heavy hydrocarbon oils into valuable lighter products. Nickel, cobalt, vanadium and molybdenum are examples of catalytically active metals which can be suitably applied in the upgrading of residual hydrocarbon oils.

Reference is made to EP-A-67708 wherein hydrotreating catalysts are described containing 4% by weight of molybdenum trioxide supported on a support containing alumina and 8.7% by weight phosphorus calculated as $P_2O_5$ and based upon the weight of the support.

Investigations in the field of processes for catalytic conversion of hydrocarbon oils are aimed, inter alia, at finding new and/or more efficient processes, for example by applying more active catalysts.

It has now been found that markedly improved hydroconversion results can be obtained when use is made of supported-hydroconversion catalysts which have been treated with certain metal compounds prior to impregnation with the appropriate catalytically active metal compound.

The present invention therefore relates to a process for the catalytic conversion of residual hydrocarbon oils, wherein hydrocarbon oils are contacted at elevated temperature and pressure and in the presence of hydrogen with a molybdenum-containing catalyst comprising as support silica containing up to 20% by weight of alumina, which support has been treated with at least a compound of a Group IVB or IIIA element, and which has subsequently been treated with a molybdenum compound.

The use of catalysts according to the present invention results in particular in an improved hydrodesulphurization activity together with an increased conversion of heavy feedstock (boiling above 520 °C).

The catalysts to be used in the process according to the present invention include supports which have been treated with at least a compound of a Group IVB or IIIA element. Zirconium-, aluminium- or titanium- compounds can be suitably applied. It is preferred to use a catalyst which support has been treated with a zirconium-containing compound. Particularly preferred are catalysts wherein the proportion of zirconium (expressed as metal) deposited on the (silica) support prior to the treatment with molybdenum is in the range of 3-12 pbw per 100 pbw of silica.

It should be noted that the use of cobalt-containing supported catalysts which have been treated with a zirconium or a titanium compound prior to the impregnation with cobalt in the preparation of hydrocarbons from carbon monoxide and hydrogen is known from British patent specification: GB-A-2140701.

The conversion process according to the present invention relates to residual hydrocarbon oils, which have preferably a $C_5$-asphaltenes content of more than 2.5% by weight and a vanadium/nickel content of less than 400 ppm. Preferred feedstocks are those which have been obtained at least partly as a distillation residue of a distillation under reduced pressure of an atmospheric residue. The $C_5$-asphaltenes content of the residual hydrocarbon oils to be used as starting material is preferably more than 10% by weight, in particular between 15% by weight and 25% by weight.

The catalysts to be used in the present process, contain silica as support; if desired the catalysts may contain also up to 20% by weight of alumina. They comprise as active metal molybdenum, preferably in a quantity of more than 2 parts by weight per 100 parts by weight of silica have an average pore diameter suitably between 5 and 30 nm. Preferably, the amount of molybdenum is not more than 12 parts weight per 100 parts by weight of silica. The molybdenum may be present on the support in metallic form or as sulphide or oxide. The use of catalysts in the sulphidic form is preferred.

The catalysts to be used in the process according to the present invention may comprise only molybdenum as active metal, but molybdenum-containing catalysts which contain additional metals, for example nickel can also be used. Especially when the conversion process is carried out under hydrodesulphurization conditions, it is preferred to use a catalyst which contains both nickel and molybdenum.

The nickel content in the molybdenum-containing catalysts preferably ranges from 0.1-3 parts by weight per 100 parts by weight of silica.

The catalysts used in the process according to the invention can be prepared preferably by separate impregnation, e.g. first with depositing a compound of a Group IVB or IIIA element on the support and subsequently molybdenum and other metals, if any. The separate impregnation steps may be carried out in the form of dry or wet impregnation. In case of dry impregnation the support material is contacted with a solution containing a compound of the metal to be impregnated, which solution has a volume substantially corresponding with the pore volume of the support material. In case of wet impregnation the support material is contacted with a solution containing a compound of the metal to be impregnated, which solution has a volume substantially more than twice the pore volume of the support material.

In the process according to the invention preference is given to the use of catalysts during the preparation of which the separate impregnation steps have been carried out in the form of dry impregnation. The number of impregnation steps to be carried out during the production of the catalysts is determined substantially by the degree of solubility of the metal compound(s) in the solvent used and the desired metal load on the catalyst, with the understanding that more impregnation steps will be needed according as the degree of solubility of the metal compounds in the solvent used is lower and the desired metal load on the catalyst is higher.

After the (last) impregnation step in which the compound of a Group IVB or IIIA element is desposited on the support and after the (last) impregnation step in which molybdenum is deposited on the thus treated support, the metal-containing composition obtained should be calcined. If the deposition of the compound of a Group IVB or IIIA element and/or molybdenum is carried out in more than one step, the metal-containing composition obtained is preferably calcined after each impregnation step.

It is furthermore preferred to dry the impregnated material before subjecting it to calcination in order to remove any solvent present therein. The calcination is preferably carried out at a temperature between 350 and 500 °C. After the calcination succeeding to the last impregnation step in which molybdenum is deposited on the support, the support may be subjected to a sulphiding treatment. This treatment is preferably carried out at a temperature between 200 and 350 °C.

The catalysts preferably used in the process according to the invention are catalysts containing zirconium. For impregnating the (silica)-support with a compound of a Group IVB or IIIA element and molybdenum both aqueous and non-aqueous solutions are eligible. Examples of suitable aqueous solutions of zirconium compounds are solutions of zirconium nitrate or zirconyl chloride in water. Examples of suitable non-aqueous solutions of zirconium compounds are solutions of zirconium alkoxides in aromatic hydrocarbons or mixtures of aromatic hydrocarbons and aliphatic alcohols. An impregnation liquid which is very suitable for the present purpose is a solution of zirconium tetrapropoxide in a mixture of benzene and propanol. In view of the relatively low degree of solubility in water of most of the inorganic zirconium compounds and the preferred use of catalysts with a relatively high zirconium load, the present catalysts are preferably prepared using a solution of an inorganic zirconium compound in an organic solvent or a mixture of organic solvents as the impregnation liquid for depositing zirconium on the silica. Use can also be made of the appropriate aluminium or titanium compounds.

Silica particles which can be used suitably as support for the catalysts to be used in the process according to the present invention can be prepared by spray-drying of a silica gel followed by extrusion of the spray-dried micro particles to form larger particles. Also substantially spherical silica particles obtained by means of the known oil drop method can be used advantageously. In the latter method a silica hydrosol is formed, the hydrosol is combined with a gelation agent and the mixture is dispersed as drops in an oil until they have solidified to spherical hydrogel particles which are subsequently separated off, washed, dried and calcined. The present catalysts or supports carriers can inter alia be formed by extrusion or tabletting. In addition to these shaping techniques, especially the known nodulizing technique is a very attractive shaping method for the present catalysts or catalyst supports. By this method catalyst particles having a diameter of at most 0.1 mm are agglomerated to particles with a diameter of at least 1 mm by means of a granulation liquid.

The catalysts to be used in the process according to the present invention normally have an average particle diameter between 0.5 and 5 mm, in particular between 0.5 and 2.5 mm. The average pore diameter of the catalyst particles to be applied is in the range between 5 and 30 nm, preferably between 5 and 25 nm and in particular between 10 and 20 nm. Such catalysts are commonly referred to as "narrow pore" catalysts.

The complete pore diameter distribution of a catalyst can be determined by means of the nitrogen adsorption/desorption method (as described by E.V. Ballou and O.K. Doolen in Analytic Chemistry $\underline{32}$, 532 (1960)) in combination with the mercury penetration method (as described by H.L. Ritter and L.C. Drake in Industrial and Engineering Chemistry, Analytical Edition $\underline{17}$, 787 (1945)), using mercury pressures of 1-2000 bar. The pore diameter distribution of a catalyst in the pore diameter range of 7.5 nm and below is calculated with reference to the nitrogen desorption isotherm (assuming cylindrical pores) by the method described by J.C.P. Broekhoff and J.H. de Boer in Journal of Catalysis 10, 377 (1968) and the pore diameter distribution of a catalyst in the pore diameter range above 7.5 nm is calculated by means of the formula:

$$\text{pore diameter (in nm)} = \frac{15,000}{\text{absolute mercury pressure (in bar)}}$$

The total pore volume of a catalyst is the sum of the nitrogen pore volume present in pores with a diameter of 7.5 nm and below (determined by means of the above-mentioned nitrogen adsorption/desorption method) and the mercury pore volume present in pores with a diameter above 7.5 nm (determined by means of the above-mentioned mercury penetration method).

After a complete pore diameter distribution of a catalyst sample has been determined, the pore diameter is read from a graph in which for the pore diameter range of from 0 to 100 nm for each successive pore volume increment that is present in pores with an equal diameter interval smaller than or equal to 2 nm, and which pore volume increment is smaller than or equal to 10% of the pore volume, the quotient of the pore volume increment and the corresponding pore diameter interval has been cumulatively plotted as a function of the linear average pore diameter over the relevant pore diameter interval; the average pore diameter is the pore diameter corresponding to 50% of the total quotient.

The average particle diameter can be determined as follows. After a complete sieve analysis of a representative catalyst sample, using the set of standard sieves described in the 1969 Book of ASTM Standards, Part 30, pp. 96-101 (ASTM Designation: E 11-61), has been carried out, the average particle diameter is read from a graph in which for each successive sieve fraction the percentage by weight, based on the total weight of the catalyst sample, has been cumulatively plotted as a function of the linear average particle diameter of the relevant sieve fraction; the average particle diameter is the particle diameter corresponding to 50% of the total weight.

The process according to the present invention is suitably carried out by passing the hydrocarbon oil to be converted at elevated temperature and pressure in the presence of hydrogen, in upward, downward or radial direction through one or more vertically arranged reactors containing one or more fixed or moving bed(s) of the appropriate catalyst particles. If desired, the process can also be carried out by suspending the catalyst in the hydrocarbon oil to be converted. The process according to the present invention is suitably carried out at a temperature of 325-475 °C and a hydrogen partial pressure of up to 300 bar. Preferably the process according to the present invention is carried out at a temperature between 350 °C and 425 °C and a hydrogen partial pressure of 70-250 bar.

When residual heavy hydrocarbon oils are to be converted which have a total metal content in excess of 400 ppm, such hydrocarbon oils should be subjected to a pre-treatment in order to reduce the total metal content to a value below 400 ppm. This demetallization treatment can be carried out suitably by using demetallization catalysts well-known in the art, for instance catalysts described in Dutch patent specification NL-A-7309387. Very good results can be obtained when using supported demetallization catalysts having an average pore diameter larger than 30 nm, in particular catalysts containing nickel and/or vanadium.

Part or all of the product obtained by the hydroconversion process according to the present invention may be subjected to further catalytic processes, in particular to catalytic processes to obtain light hydrocarbon oils.

The process according to the present invention is preferably carried out in bunker flow operation, i.e. in reactors which ensure mass flow of the catalyst particles and which are designed in such a way that periodically or continually catalyst particles can be withdrawn from the bottom of the reactor while fresh catalyst particles can be introduced in the upper part of the reactor. Normally such reactors contain one or more catalyst beds resting on conical supports and having a central catalyst outlet duct provided with screens to separate liquid and gaseous effluent from the catalyst particles. The process according to the present invention can also be carried out suitably in a number of reactors in series, one of then may be temporarily off-stream to replenish the catalyst load.

The invention will now be illustrated with reference to the following Examples.

EXAMPLE I

Experiments were carried out using three different catalysts (A, B and C) for the hydroconversion of a short residue obtained by distillation under reduced pressure of an atmospheric distillation residue of a Middle Fast crude oil. Some of the properties of the catalysts applied are given in Table I.

Catalyst A, containing nickel and vanadium on silica, is a comparative catalyst which activities for certain processes have been set as 1 (see Table II).

Catalyst B, not according to the invention, was prepared by impregnating a silica carrier with a solution of ammonium dimolybdate in 25 %wt ammonia. The resulting mixture was stirred for one hour and thereafter dried at 120 °C for one hour followed by calcination at 450 °C for one hour.

Catalyst C, according to the invention, was prepared by multiple impregnation of a silica support with a commercially available, water-free Zr(n-propoxide)$_4$ solution followed by dehydration and calcination, whereafter the composition was treated in the manner described for catalyst B.

## TABLE I

| Catalyst | A<br>0.5 Ni/2V-SiO$_2$ | B<br>4 Mo-SiO$_2$ | C<br>4 Mo/ZrO$_2$-SiO$_2$ |
|---|---|---|---|
| pore volume ml/g | 0.87 | 0.9 | 1.10 |
| pore diameter nm | 59 | 14 | 16 |
| particle diameter mm | 1.5 | 1.3 | 1.3 |

The heavy residual hydrocarbon oil of which 95% by volume boiled above 520 °C and which contained 4.1 %wt of sulphur and 328 ppmw Vanadium + Nickel and which had a C$_5$ asphaltenes content of 19.2 %wt and a RCT (Ramsbottom Carbon Test) of 21.8 %wt, was passed together with hydrogen over the appropriate catalyst at a temperature of 410 °C and a hydrogen partial pressure of 120 bar at a space velocity of 1.4 kg.1$^{-1}$.h$^{-1}$ in a gas/liquid once-through operation. The results expressed as relative activities based on catalyst volume, are given in Table II.

## TABLE II

| Catalyst<br>Removal of | A<br>Ni/V SiO$_2$ | B<br>Mo SiO$_2$ | C<br>Mo/ZrO$_2$-SiO$_2$ |
|---|---|---|---|
| S | 1 | 4.1 | 5.3 |
| V | 1 | 1.8 | 1.5 |
| 520 °C$^+$ | 1 | 1.7 | 2.9 |
| RCT | 1 | 1.7 | 1.7 |
| C$_5$-asphaltenes | 1 | 1 | 1 |

It will be clear from Table II that heavy residual hydrocarbon oils can be converted advantageously in the process according to the present invention, compared with using the well-known hydrotreating catalyst A. Furthermore, it will be clear that for the removal of sulphur and the conversion of material boiling above 520 °C the process according to the present invention is more attractive than the process where use is made of a molybdenum-containing conversion catalyst (catalyst B), the support of which has not been treated in accordance with the present invention.

### EXAMPLE II

Experiments were carried out using three different catalysts (A, B and D), for the hydroconversion of a heavy residual hydrocarbon oil.

Catalysts A and B are the same comparative catalysts as described in Example I.

Some of the properties of catalyst D are given in Table III. The preparation of catalyst D was similar to the preparation of catalyst C except that, for the preparation of catalyst D use was made of an ammonium dimolybdate solution also containing a nickel salt.

TABLE III

| Catalyst | D<br>4 Ni/10 Mo/$ZrO_2$-$SiO_2$ |
|---|---|
| pore volume ml/g | 1.05 |
| pore diameter nm | 17 |
| particle diameter mm | 1.3 |

The heavy residual hydrocarbon oil with the same composition as the hydrocarbon oil described in Example I was contacted under the same reaction conditions as described in Example I, with the appropriate catalyst. The results expressed as relative activities based on catalyst volume are given in Table IV.

TABLE IV

| Catalyst<br>Removal of | A<br>Ni/V/$SiO_2$ | B<br>4 Mo/$SiO_2$ | D<br>4 Ni/10 Mo/$ZrO_2$-$SiO_2$ |
|---|---|---|---|
| S | 1 | 4.1 | 10.4 |
| V | 1 | 1.8 | 1.3 |
| 520 °C$^+$ | 1 | 1.7 | 2.3 |
| RCT | 1 | 1.7 | 2.1 |
| $C_5$ asphaltenes | 1 | 1. | 1. |

It will be clear from Table IV that heavy residual oils can be converted advantageously using the process according to the present invention compared with the well-known hydroconversion catalyst A. Furthermore, it will be clear from Table IV that for the removal of sulphur, RCT, and the conversion of material boiling above 520 °C the process according to the present invention is more attractive then the process wherein use is made of the conversion catalyst B.

## Claims

1. Process for the catalytic conversion of residual hydrocarbon oils, wherein hydrocarbon oils are contacted at elevated temperature and pressure and in the presence of hydrogen with a molybdenum-containing catalyst comprising as support silica containing up to 20% by weight of alumina, which support has been treated with at least a compound of a Group IVB or IIIA element, and which has subsequently been treated with a molybdenum compound.

2. A process according to claim 1, wherein use is made of a catalyst obtained by multiple impregnation.

3. A process according to the claims 1-2, wherein use is made of a catalyst comprising 2-12 parts by weight of molybdenum per 100 parts by weight of silica.

4. A process according to any one of the claims 1-3, wherein the compound of a Group IVB or IIIA element is a zirconium-containing compound.

5. A process according to claim 4, wherein use is made of a catalyst comprising 3-12 parts by weight of zirconium per 100 parts by weight of silica.

6. A process according to any one of the claims 1-5, wherein hydrocarbon oils which have a total vanadium and nickel content of less than 400 ppmw are converted.

7. A process according to any one of the claims 1-6, wherein a hydrocarbon oil is used having a C5-asphaltene content of more than 2.5% by weight.

8. A process according to any one of the claims 1-7, wherein the process is carried out at a temperature of 325-475 °C and a hydrogen partial pressure of up to 300 bar.

9. A process according to any one of the claims 1-8, wherein the process is carried out at a temperature of 350-425 °C and a hydrogen partial pressure of 70-250 bar.

10. A process according to any one of the claims 1-9, wherein use is made of a catalyst additionally containing nickel and wherein the process is carried out under hydrodesulphurization conditions.

**Patentansprüche**

1. Verfahren zur katalytischen Umwandlung von Rückstands-Kohlenwasserstoffölen, bei welchem Kohlenwasserstofföle bei erhöhter Temperatur und erhöhtem Druck in Gegenwart von Wasserstoff mit einem Molybdän enthaltenden Katalysator kontaktiert werden, welcher als Träger Siliciumdioxid mit einem Gehalt bis zu 20 Gewichtsprozent Aluminiumoxid umfaßt, wobei der Träger mit mindestens einer Verbindung eines Elements der Gruppe IVB oder IIIA behandelt worden ist und der an-schließend mit einer Molybdänverbindung behandelt worden ist.

2. Ein Verfahren nach Anspruch 1, bei welchem ein durch mehrfaches Imprägnieren erhaltener Katalysator eingesetzt wird.

3. Ein Verfahren nach den Ansprüchen 1 bis 2, in welchem ein Katalysator eingesetzt wird, der 2 bis 12 Gewichtsteile Molybdän je 100 Gewichtsteile Siliciumdioxid enthält.

4. Ein Verfahren nach einem der Ansprüche 1 bis 3, in welchem die Verbindung eines Elements der Gruppe IVB oder IIIA eine Zirkonium enthaltende Verbindung ist.

5. Ein Verfahren nach Anspruch 4, in welchem ein Katalysator eingesetzt wird, der 3 bis 12 Gewichtsteile Zirkonium je 100 Gewichtsteile Siliciumdioxid umfaßt.

6. Ein Verfahren nach einem der Ansprüche 1 bis 5, in welchem Kohlenwasserstofföle umgewandelt werden, die einen Gesamtgehalt an Vanadium und Nickel von weniger als 400 Gewichtsteilen pro Million aufweisen.

7. Ein Verfahren nach einem der Ansprüche 1 bis 6, in welchem ein Kohlenwasserstofföl eingesetzt wird, das einen $C_5$-Asphaltengehalt von mehr als 2,5 Gewichtsprozent aufweist.

8. Ein Verfahren nach einem der Ansprüche 1 bis 7, in welchem das Verfahren bei einer Temperatur von 325 - 475°C und einem Wasserstoffpartialdruck von bis zu 300 bar durchgeführt wird.

9. Ein Verfahren nach einem der Ansprüche 1 bis 8, in welchem das Verfahren bei einer Temperatur von 350 - 425°C und einem Wasserstoffpartialdruck von 70 - 250 bar durchgeführt wird.

10. Ein Verfahren nach einem der Ansprüche 1 bis 9, in welchem ein Katalysator eingesetzt wird, welcher zusätzlich Nickel enthält und wobei das Verfahren unter Hydroentschwefelungsbedingungen durchgeführt wird.

## Revendications

1. Procédé pour la conversion catalytique d'huiles résiduelles d'hydrocarbures, dans lequel les huiles d'hydrocarbures sont mises en contact à température et pression élevées et en présence d'hydrogène avec un catalyseur contenant du molybdène comprenant comme support de la silice contenant jusqu'à 20 % en poids d'alumine, lequel support a été traité avec au moins un composé d'un élément du groupe IVB ou IIIA, et a été traité ensuite avec un composé du molybdène.

2. Un procédé selon la revendication 1, dans lequel on utilise un catalyseur obtenu par imprégnation multiple.

3. Un procédé selon les revendications 1-2, dans lequel on utilise un catalyseur comprenant 2-12 parties en poids de molybdène pour 100 parties en poids de silice.

4. Un procédé selon l'une quelconque des revendications 1-3, dans lequel le composé d'un élément du groupe IVB ou IIIA est un composé contenant du zirconium.

5. Un procédé selon la revendication 4, dans lequel on utilise un catalyseur comprenant 3-12 parties en poids de zirconium pour 100 parties en poids de silice.

6. Un procédé selon l'une quelconque des revendications 1-5, dans lequel on transforme des huiles d'hydrocarbures qui ont une teneur totale en vanadium et en nickel de moins de 400 ppm en poids.

7. Un procédé selon l'une quelconque des revendications 1-6, dans lequel on utilise une huile d'hydrocarbures ayant une teneur en asphaltènes en $C_5$ de plus de 2,5 % en poids.

8. Un procédé selon l'une quelconque des revendications 1-7, qui est mis en oeuvre à une température de 325-475°C et une pression partielle d'hydrogène allant jusqu'à 300 bars.

9. Un procédé selon l'une quelconque des revendications 1-8, qui est mis en oeuvre à une température de 340-425°C et une pression partielle d'hydrogène de 70-250 bars.

10. Un procédé selon l'une quelconque des revendications 1-9, dans lequel on utilise un catalyseur contenant en outre du nickel et qui est mis en oeuvre dans des conditions d'hydrodésulfuration.